(19) Europäisches Patentamt
European Patent Office
Office européen des brevets

(11) Veröffentlichungsnummer: **0 063 363**
**B1**

# (12) EUROPÄISCHE PATENTSCHRIFT

(45) Veröffentlichungstag der Patentschrift: **12.12.84**

(51) Int. Cl.³: **C 09 D 3/82,** C 08 L 83/04, D 21 H 1/40

(21) Anmeldenummer: **82103154.9**

(22) Anmeldetag: **15.04.82**

## (54) Verfahren zum Herstellen von klebrige Stoffe abweisenden Überzügen.

(30) Priorität: **16.04.81 DE 3115563**

(43) Veröffentlichungstag der Anmeldung: **27.10.82 Patentblatt 82/43**

(45) Bekanntmachung des Hinweises auf die Patenterteilung: **12.12.84 Patentblatt 84/50**

(84) Benannte Vertragsstaaten: **AT BE DE GB IT NL**

(56) Entgegenhaltungen:
**EP - A - 0 006 172**
**DE - A - 2 559 379**

(73) Patentinhaber: **WACKER-CHEMIE GMBH, Prinzregentenstrasse 22, D-8000 München 22 (DE)**

(72) Erfinder: **Hockemeyer, Friedrich, Mühlbachstrasse 14, D-8261 Emmerting (DE)**
Erfinder: **Preiner, Gerhard, Dr. Dipl.-Chem., Mehringer Strasse 56, D-8263 Burghausen (DE)**

EP 0 063 363 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Verfahren zum Herstellen von klebrige Stoffe abweisenden Überzügen durch Auftragen von Organopolysiloxan mit SiC-gebundenen Gruppen, die aliphatische Mehrfachbindung aufweisen, Organopolysiloxan mit Si-gebundenem Wasserstoff und die Anlagerung von Si-gebundenem Wasserstoff an aliphatische Mehrfachbindung förderndem Katalysator auf die klebrige Stoffe abweisend zu machenden Oberflächen und Vernetzung vom Organopolysiloxan, wobei ein unterschiedliches Ausmaß der Abweisung von klebrigen Stoffen eingestellt werden kann, sind bereits bekannt. Hierzu wird auf z. B. US-A-4 154 714, ausgegeben 15. Mai 1979, Friedrich Hockemeyer und Mitarbeiter, Wacker-Chemie GmbH, verwiesen.

Die erfindungsgemäß hergestellten Überzüge beeinträchtigen die Klebkraft der Klebstoffe, mit denen sie in Berührung kommen, insbesondere, wenn diese Berührung längere Zeit dauert, weniger als bisher bekannte vergleichbare Überzüge.

Gegenstand der Erfindung ist ein Verfahren zum Herstellen von klebrige Stoffe abweisenden Überzügen durch Auftragen von Organopolysiloxan und die Anlagerung von Si-gebundenem Wasserstoff an aliphatische Mehrfachbindung förderndem Katalysator auf die klebrige Stoffe abweisend zu machenden Oberflächen und Vernetzung vom Organopolysiloxan durch die Anlagerung von Si-gebundenem Wasserstoff an aliphatische Mehrfachbindung, dadurch gekennzeichnet, daß zumindest ein Teil vom aufzutragendem Organopolysiloxan in jedem seiner Moleküle sowohl SiC-gebundene Gruppen, die aliphatische Mehrfachbindung aufweisen, als auch Si-gebundenen Wasserstoff enthält und eine Viskosität von mindestens 300 mPa · s bei 25°C hat, wobei die Mitverwendung einer organischen Verbindung mit mindestens einer Gruppierung

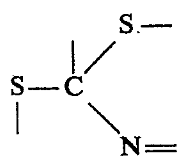

in Mengen, welche eine Verzögerung oder Verhinderung der Anlagerung von Si-gebundenem Wasserstoff an aliphatische Mehrfachbindung bei Raumtemperatur bewirken, ausgeschlossen ist.

DE-A-2 824 630, offengelegt 13. Dezember 1979, B. Deubzer und Mitarbeiter, Wacker-Chemie GmbH, betrifft wärmehärtbare Organopolysiloxan-Massen, welche durch Anlagerung von Si-gebundenem Wasserstoff an aliphatische Mehrfachbindung härtbar sind, wobei diese Anlagerung durch Katalysator, insbesondere Platinkatalysator, gefördert wird, und diese Massen einen eine Verzögerung oder Verhinderung der Härtung zumindest bei Raumtemperatur bewirkenden Zusatz enthalten, der mindestens zum Teil aus mindestens einer organischen Verbindung mit mindestens einer Gruppierung

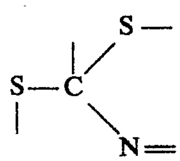

besteht. In dieser Veröffentlichung wird angegeben, daß aliphatische Mehrfachbindung und Si-gebundener Wasserstoff in ein und derselben Art von Organosiliciumverbindung vorliegen können, Si-gebundener Wasserstoff in Mengen von 0,1 bis 15 Si-gebundenen Wasserstoffatomen je aliphatischer Mehrfachbindung vorliegen kann und daß die wärmehärtbaren Organopolysiloxanmassen als Mittel zum Herstellen von klebrige Stoffe abweisenden Überzügen eingesetzt werden können. Deshalb ist beim erfindungsgemäßen Verfahren die Mitverwendung einer organischen Verbindung mit mindestens einer Gruppierung

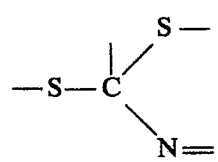

in Mengen, welche eine Verzögerung oder Verhinderung der Anlagerung von Si-gebundenem Wasserstoff an aliphatische Mehrfachbindung bei Raumtemperatur bewirken, ausgeschlossen. Es sei jedoch betont, daß DE-A-2 824 630 keinerlei Einstellung eines unterschiedlichen Ausmaßes der Abweisung von klebrigen Stoffen zu entnehmen ist.

US-A-4 043 977, ausgegeben 23. August 1977, A. de Montigny und Mitarbeiter, Bayer Aktiengesellschaft, beschreibt eine Zusammensetzung zur Herstellung von klebrige Stoffe abweisenden Überzügen, die Organopolysiloxan mit SiC-gebundenen Vinylgruppen, also Gruppen, die aliphatische Mehrfachbindung aufweisen, und Si-gebundenen Wasserstoff in ein und demselben Molekül, jedoch nur höchstens 10 Siliciumatomen je Molekül und einen Platinkomplex enthält. Die erfindungsgemäß verwendeten Organopolysiloxane mit SiC-gebundenen Gruppen, die aliphatische Mehrfachbindung aufweisen, und Si-gebundenem Wasserstoff in ein und demselben Molekül enthalten jedoch viel mehr als 10 Siliciumatome je Molekül. Auch US-A-4 043 977 ist keinerlei Einstellung eines unterschiedlichen Ausmaßes der Abweisung von klebrigen Stoffen zu entnehmen.

Als Organopolysiloxane, die in jedem ihrer Moleküle sowohl SiC-gebundene Gruppen, die aliphatische Mehrfachbindung aufweisen, als auch Si-gebundenen Wasserstoff enthalten und eine Viskosität von mindestens 300 mPa · s bei 25° C haben, sind solche bevorzugt, die durch die allgemeine Formel

$$R^1(CH_3)_2SiO(SiR_2O)_m(SiCH_3HO)_n(SiCH_3R^1O)_xSi(CH_3)_2R^1 \quad (I)$$

wiedergegeben werden können. In dieser Formel bedeutet R gleiche oder verschiedene einwertige, gegebenenfalls substituierte, von aliphatischer Mehrfachbindung freie Kohlenwasserstoffreste, $R^1$ gleiche oder verschiedene Kohlenwasserstoffreste mit aliphatischer Mehrfachbindung, m, n und x jeweils ganze Zahlen, wobei x auch 0 sein kann, deren Summen $m+n+x$ jeweils einen solchen Wert haben, daß die durchschnittliche Viskosität der Organopolysiloxane der oben angegebenen Formel mindestens 300 mPa · s bei 25°C beträgt, wobei mindestens 3 Si-gebundene Wasserstoffatome je Molekül vorliegen, das Verhältnis von m : n 1 : 1 bis 99 : 1 und das Verhältnis der $SiCH_3HO$-Einheiten, also der Methylhydrogensiloxaneinheiten, zu den Einheiten mit einer $R^1$-Gruppe 5 : 1 bis 50 : 1 beträgt.

Die Organopolysiloxane, die in jedem ihrer Moleküle sowohl Si-gebundene Kohlenwasserstoffreste mit aliphatischer Mehrfachbindung als auch Si-gebundenen Wasserstoff enthalten und eine Viskosität von mindestens 300 mPa · s bei 25° C haben, können aber auch z. B. solche der folgenden Formeln sein:

$$(CH_3)_3SiO(SiCH_3HO)_a(SiCH_3R^1O)_b(SiR_2O)_cSi(CH_3)_3 \quad (II)$$

$$H(CH_3)_2SiO(SiCH_3HO)_d(SiCH_3R^1O)_e(SiR_2O)_fSi(CH_3)_2H \quad (III)$$

$$R^1(CH_3)_2SiO(SiCH_3HO)_g(SiR_2O)_h(SiCH_3R^1O)_iSi(CH_3)_2H \quad (IV)$$

$$H(CH_3)_2SiO(SiCH_3HO)_b(SiR_2O)_p(SiCH_3R^1O)_qSi(CH_3)_3 \quad (V)$$

In diesen Formeln haben R und $R^1$ jeweils die oben dafür angegebene Bedeutung. a, b, c, d, e, f, g, h, i, l, p und q sind jeweils ganze Zahlen, wobei i auch 0 sein kann.

$a+b+c$ ist mindestens 200
$d+e+f$ ist mindestens 200
$g+h+i$ ist mindestens 200
$l+p+q$ ist mindestens 200.

Auch hier liegen vorzugsweise mindestens 3 Si-gebundene Wasserstoffatome je Molekül vor. Das Verhältnis der Methylhydrogensiloxaneinheiten zu $R^1$-Gruppen beträgt vorzugsweise 5 : 1 bis 50 : 1.

Je höher das Verhältnis von Si-gebundenem Wasserstoff zu aliphatischer Mehrfachbindung ist, desto geringer ist das Ausmaß der Abweisung von klebrigen Stoffen.

Innerhalb bzw. entlang der Organopolysiloxanketten der oben angegebenen Formeln können, was bei derartigen Formeln üblicherweise nicht dargestellt wird, zusätzlich zu den $SiCH_3HO$-, $SiR_2O$- und den gegebenenfalls vorhandenen $SiCH_3R^1O$-Einheiten noch andere Siloxaneinheiten vorliegen. Beispiele für solche anderen, meist jedoch lediglich als Verunreinigungen vorliegenden Siloxaneinheiten sind solche der Formeln $RSiO_{3/2}$, $R_3SiO_{1/2}$ und $SiO_{4/2}$, wobei R jeweils die oben dafür angegebene Bedeutung hat. Die Menge an solchen anderen Siloxaneinheiten beträgt vorzugsweise höchstens 10 Molprozent, insbesondere höchstens 1 Molprozent, der Einheiten in den Organopolysiloxanen der oben angegebenen Formel.

Beispiele für Kohlenwasserstoffreste R in den oben angegebenen Formeln sind Alkylreste mit 1 bis 18 Kohlenstoffatomen, wie der Methyl-, Ethyl-, n-Propyl-, Isopropyl-, n-Butyl- und sec.-Butylrest sowie Octadecylreste; Cycloalkylreste mit 5 bis 8 Kohlenstoffatomen, wie der Cyclohexyl- und Cycloheptylrest sowie Methylcyclohexylreste; Arylreste, wie der Phenylrest und Xenylreste; Alkarylreste, wie Tolylreste; und Aralkylreste, wie der Benzyl- und der beta-Phenylethylrest.

Beispiele für substituierte Kohlenwasserstoffreste R in den oben angegebenen Formeln sind insbesondere halogenierte Kohlenwasserstoffreste, wie der 3,3,3-Trifluorpropylrest und o-, p- und m-Chlorphenylreste.

Schon wegen der leichteren Zugänglichkeit sind vorzugsweise mindestens 50%, insbesondere mindestens 90% der Anzahl der Reste R Methylreste.

Beispiele für Reste $R^1$ sind insbesondere Vinylreste, ferner Allyl-, Acryloxy- und Methacryloxyreste.

Sollen die erfindungsgemäß verwendeten Gemische zumindest im wesentlichen frei von Lösungsmitteln sein, was z. B. für den Umweltschutz erwünscht ist, Gefahren z. B. durch Explosion vermeidet, Transport- und Lagerkosten verringert und außerdem den Aufwand für die Verdampfung des Lösungsmittels vermeidet, so haben die Organopolysiloxane, die in jedem ihrer Moleküle sowohl SiC-gebundene Gruppen mit aliphatischer Mehrfachbindung als auch Si-gebundenen Wasserstoff enthalten und eine Viskosität von mindestens 300 mPa · s bei 25° C haben, vorzugsweise eine Viskosität von höchstens 5000 mPa · s, insbesondere höchstens 1500 mPa · s, jeweils gemessen bei 25° C.

Werden aber bei dem erfindungsgemäßen Verfahren Lösungsmittel mitverwendet, so können die Organopolysiloxane, die in jedem ihrer Moleküle sowohl SiC-gebundene Gruppen mit aliphatischer Mehrfachbindung als auch Si-gebundenen Wasserstoff enthalten und eine Viskosität von mindestens 300 mPa · s bei 25° C haben, auch Viskositäten im Bereich von 5000 mPa · s bei 25° C bis zu einem im Brabender-Plastograph bei 25° C und 60 Umdrehungen je Minute bestimmten Wert von $10^4$ Nm haben.

Bei den Organopolysiloxanen, die in jedem ihrer Moleküle sowohl SiC-gebundene Gruppen mit aliphatischer Mehrfachbindung als auch Si-gebundenen Wasserstoff enthalten und eine Viskosität von mindestens 300 mPa · s bei 25° C haben, kann es sich um nur eine Art von Mischpolymer oder um Gemische aus verschiedenen Mischpolymeren mit jeweils gleichem Polymerisationsgrad oder um Gemische aus gleichen oder verschiedenen Mischpolymeren verschiedenen Polymerisationsgrades handeln.

Somit können z. B. Polymerisate der Formel (I) im Gemisch mit Polymerisaten der Formel (III) eingesetzt werden.

Die Diorganosiloxaneinheiten und die Methylhydrogensiloxaneinheiten können in statistischer (englisch: random) Verteilung oder in Form von Polymer-Blöcken vorliegen.

Die Herstellung derartiger Verbindungen kann z. B. durch Äquilibrieren von 1,3-Divinyl-1,1,3,3-tetramethyldisiloxan mit einem Mischhydrolysat aus Dimethyldichlorsilan und Methylhydrogendichlorsilan in an sich bekannter Weise erfolgen.

Als die Anlagerung von Si-gebundenem Wasserstoff an aliphatische Mehrfachbindung fördernde Katalysatoren können im Rahmen des erfindungsgemäßen Verfahrens beliebige die Anlagerung von Si-gebundenem Wasserstoff an aliphatische Mehrfachbindung fördernde Katalysatoren verwendet werden. Beispiele für solche Katalysatoren sind metallisches und feinverteiltes Platin, Ruthenium, Rhodium, Palladium und Iridium, wobei sich diese Metalle jeweils auf festen Trägern, wie Siliciumdioxyd, Aluminiumoxyd oder Aktivkohle, befinden können, und Verbindungen bzw. Komplexe dieser Elemente, wie $PtCl_4$, $H_2PtCl_6 \cdot 6\,H_2O$, $Na_2PtCl_4 \cdot 4\,H_2O$, Platin-Olefin-Komplexe, Platin-Alkohol- oder Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6\,H_2O$ und Cyclohexanon, Platin-Vinylsiloxan-Komplexe, insbesondere Platin-Divinyltetramethyldisiloxan-Komplexe mit oder ohne Gehalt an nachweisbarem anorganisch gebundenem Halogen, Bis-(gamma-picolin)-platindichlorid, Trimethylenpyridinplatindichlorid, Dicyclopentadienplatindichlorid und Dimethylsulfoxyd-ethylen-platin(II)-dichlorid sowie das Umsetzungsprodukt aus in 1-Octen gelöstem Platintetrachlorid mit sec.-Butylamin.

Platinverbindungen bzw. Platinkomplexe sind als die Anlagerung von Si-gebundenem Wasserstoff an aliphatische Mehrfachbindung fördernde Katalysatoren im Rahmen des erfindungsgemäßen Verfahrens bevorzugt.

Es kann eine Art von die Anlagerung von Si-gebundenem Wasserstoff an aliphatische Mehrfachbindung förderndem Katalysator verwendet werden. Es kann aber auch ein Gemisch aus mindestens zwei solcher Katalysatoren verwendet werden.

Wird als die Anlagerung von Si-gebundenem Wasserstoff an aliphatische Mehrfachbindung fördernder Katalysator Platinverbindung bzw. Platinkomplex eingesetzt, so wird derartiger Katalysator vorzugsweise in Mengen von 10 bis 100 Gewichts-ppm (Gewichtsteile je Million Gewichtsteilen), insbesondere 20 bis 50 ppm, jeweils berechnet als elementares Platin und bezogen auf das Gesamtgewicht des eingesetzten Organopolysiloxans, verwendet.

Damit die bei dem erfindungsgemäßen Verfahren eingesetzten Zusammensetzungen genügend beständig sind, können sie zusätzlich zu den bisher genannten Bestandteilen mindestens ein die Anlagerung von Si-gebundenem Wasserstoff an aliphatischer Mehrfachbindung bei Raumtemperatur verzögerndes Mittel, natürlich mit Ausnahme von organischen Verbindungen mit mindestens einer Gruppierung

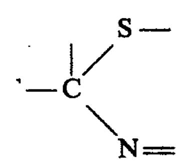

enthalten. Beispiele für derartige Mittel sind sekundäre oder tertiäre Acetylenalkohole, wie Ethinylcyclohexanol und 2-Methyl-3-butin-2-ol; ferner Benzotriazol, Triphenylphosphin, Stanno- und Mercurisalze, sowie Methylenethylketoxim, 1,3-Divinyl-1,1,3,3-tetramethyldisiloxan und Trichlorethylen.

Die Anlagerung von Si-gebundenem Wasserstoff an aliphatische Mehrfachbindung bei Raumtemperatur verzögerndes oder verhinderndes Mittel wird im Rahmen des erfindungsgemäßen Verfahrens vorzugsweise in Mengen von 0,5 bis 10 Gewichtspromille, insbesondere 1 bis 5 Gewichtspromille, jeweils bezogen auf das Gesamtgewicht des eingesetzten Organopolysiloxans eingesetzt.

Zusätzlich zu Organopolysiloxan, das in jedem seiner Moleküle sowie SiC-gebundene Gruppen mit aliphatischer Mehrfachbindung als auch Si-gebundenen Wasserstoff enthält und eine Viskosität von mindestens 300 mPa · s bei 25°C hat, können bei dem erfindungsgemäßen Verfahren auch Organopolysiloxane der gleichen Art jedoch mit niedrigerer Viskosität, Organopolysiloxane, die Si-gebundenen Wasserstoff als einzigen reaktionsfähigen Bestandteil enthalten, wie durch Trimethylsiloxygruppen endblockierte Methylhydrogenpolysiloxane, oder Organopolysiloxane, die SiC-gebundene Gruppen mit aliphatischer Mehrfachbindung, wie sie oben als Beispiele für $R^1$ angegeben wurden, als einzigen reaktionsfähigen Bestandteil enthalten, wie Vinyldimethylsiloxygruppen als endständige Einheiten enthaltende Dimethylpolysiloxane, die vorzugsweise zumindest etwa die gleiche Viskosität wie die Organopolysiloxane mit aliphatischer Mehrfachbindung und Si-gebundenen Wasserstoff im gleichen Molekül und einer Viskosität von mindestens 300 mPa · s bei 25°C aufweisen, oder Gemische aus mindestens zwei verschiedenen Klassen solcher Organopolysiloxane mitverwendet werden.

Die bei dem erfindungsgemäßen Verfahren gegebenenfalls mitverwendeten Lösungsmittel können die gleichen Lösungsmittel sein, die bei den bisher bekannten Verfahren zum Herstellen von klebrige Stoffe abweisenden Überzügen durch Auftragen von Organopolysiloxan und die Anlagerung von Si-gebundenem Wasserstoff an aliphatische Mehrfachbindung förderndem Katalysator auf die klebrige Stoffe abweisend zu machenden Oberflächen und Vernetzung vom Organopolysiloxan durch die Anlagerung von Si-gebundenem Wasserstoff an aliphatische Mehrfachbindung eingesetzt werden können. Beispiele für solche Lösungsmittel sind Benzine, z. B. Alkangemische mit einem Siedebereich von 80 bis 110°C bei 1013 mbar (abs.), Benzol, Toluol und Xylole, halogenierte Alkane mit 1 bis 6 Kohlenstoffatomen, wie Methylenchlorid, Trichlorethylen und Perchlorethylen, Ether, wie Di-n-butylether, Ester, wie Ethylacetat, und Ketone, wie Methylethylketon und Cyclohexanon.

Werden organische Lösungsmittel mitverwendet, so werden sie vorzugsweise in solchen Mengen eingesetzt, daß 2,5- bis 20gewichtsprozentige Lösungen, insbesondere 5- bis 10gewichtsprozentige Lösungen vorliegen.

Werden die erfindungsgemäß verwendeten Zusammensetzungen zumindest im wesentlichen frei von Lösungsmittel eingesetzt, so werden sie vorzugsweise in Mengen von höchstens 0,6 g/m$^2$ aufgetragen.

Das Auftragen der erfindungsgemäß verwendeten Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravurüberzugsvorrichtung, Messer- oder Rakelbeschichtung, einschließlich derjenigen mit einem Meyer-Stab (englisch: Meyerrod), oder mittels einer Luftbürste. Erfolgt das Auftragen mittels einer Offsetgravurüberzugsvorrichtung, z. B. einem Rasterwalzen-System, so kann das Substrat mit der klebrige Stoffe abweisend zu machenden Oberfläche mit höherer Geschwindigkeit laufen als der Formzylinder.

Bei den klebrige Stoffe abweisend zu machenden Oberflächen kann es sich um beliebige Oberflächen handeln, die abweisend gegenüber klebrigen Stoffen gemacht werden sollen. Beispiele für derartige Oberflächen sind diejenigen von Papieren, wie Kraftpapier oder Pergaminpapier, Zellglas, Holz, Kork, Kunststoffolien, z. B. Polyethylenfolien oder Polypropylenfolien, gewebtem oder ungewebtem Tuch aus natürlichen Fasern oder synthetischen Fasern oder Glasfasern, keramischen Gegenständen, Glas, Metallen, mit Polyethylen beschichteten Kraftpapier und von Pappe, einschließlich solcher aus Asbest. Bei dem vorstehend erwähnten Polyethylen kann es sich jeweils um Hoch-, Mittel- oder Niederdruck-Polyethylen handeln.

Die Vernetzung von Polysiloxan durch Anlagerung von Si-gebundenem Wasserstoff an aliphatische Mehrfachbindung kann durch Erwärmen auf vorzugsweise 100 bis 180°C bewirkt werden. Dieses Erwärmen kann auch mittels Infrarot-Strahlen bewirkt werden.

Anstatt daß erwärmt wird oder in Verbindung mit Erwärmen kann die Vernetzung auch durch Ultraviolett-Licht bewirkt werden, wobei wenn der die Anlagerung von Si-gebundenem Wasserstoff an aliphatische Mehrfachbindung fördernde Katalysator nicht bereits ein Photosensibilisator ist, die erfindungsgemäß verwendete Zusammensetzung auch mindestens einen Photosensibilisator, wie Benzophenon enthalten muß.

Vernetzungszeiten von 4 bis 50 Sekunden sind häufig ausreichend, um blockfreie Beschichtungen zu ergeben.

In den folgenden Beispielen beziehen sich alle Mengenangaben auf das Gewicht, soweit nichts anderes angegeben ist.

Das in den folgenden Beispielen verwendete Gemisch aus Platinkomplex und Verdünnungsmittel wurde hergestellt wie folgt (alle Mengen beziehen sich ebenfalls auf das Gewicht):

Zu einer Mischung aus 10 Teilen $H_2PtCl_6 \cdot 6\,H_2O$, 20 Teilen 1,3-Divinyl-1,1,3,3-tetramethyldisiloxan und 50 Teilen Ethanol wurden 20 Teile Natriumbicarbonat gegeben. Das Gemisch wurde 30 Minuten zum Sieden unter Rückfluß erwärmt, dann 15 Stunden stehengelassen und danach filtriert. Aus dem Filtrat wurden bei etwa 16 mbar die flüchtigen Bestandteile abdestilliert. Der Rückstand wurde in

Benzol gelöst. Die Lösung wurde filtriert und aus dem Filtrat das Benzol abdestilliert. Der Rückstand wurde in Vinyldimethylsiloxygruppen als endständige Einheiten aufweisendem Dimethylpolysiloxan mit einer Viskosität von 1000 mPa · s bei 25°C in solcher Menge gelöst, daß die Lösung 1% Platin, berechnet als Element, enthält.

Beispiel 1

Zu 90 Teilen eines Vinyldimethylsiloxygruppen als endständige Einheiten enthaltenden Dimethylpolysiloxans mit einer Viskosität von 500 mPa · s bei 25°C werden 10 Teile eines Mischpolymerisates aus Vinyldimethylsiloxan-, Methylhydrogensiloxan- und Dimethylsiloxaneinheiten mit einer Viskosität von 755 mPa · s bei 25°C, wobei das Verhältnis von Methylhydrogensiloxaneinheiten zu den Dimethylsiloxaneinheiten 0,7 : 1,0 beträgt, gegeben. Diese Mischung wird in der angegebenen Reihenfolge mit 0,2 Teilen 2-Methyl-3-butinol-2 und 0,6 Teilen des Gemisches aus Platinkomplex und Verdünnungsmittel, dessen Herstellung oben beschrieben wurde, vermischt.

Die so erhaltene Mischung wird sofort bzw. nach den in der folgenden Tabelle 1 angegebenen Zeiten mittels eines Stabs aus rostfreiem Stahl, der mit 0,2 mm dickem Draht aus rostfreiem Stahl umwickelt ist, auf gebleichtes, mit Polyvinylalkohol gestrichenes Kraftpapier aufgetragen. Das so überzogene Papier wird 8 Sekunden in einem Umluftschrank auf 150°C erwärmt. Die Beschichtung wiegt etwa 4 $g/m^2$. Sofort nach dem Entfernen des Papiers aus dem Umluftschrank wird auf die beschichtete Seite des Papiers selbstklebendes (englisch: pressure sensitive) 2 cm breites Klebeband (»Tesafilm rot Nr. 154«, Beiersdorf AG, Hamburg, BRD — der Wortteil »Tesa« ist ein registriertes Warenzeichen) gelegt und mittels einer Gummiwalze mit einer Kraft von 20 N aufgedrückt. Nach 20 Stunden Erwärmen auf 70°C unter einer Belastung von 0,2 $N/cm^2$ wird das Klebeband bei 20°C unter einem Winkel von 180° mit einer Geschwindigkeit von 15 cm/Minute von dem Papier abgezogen. Es wird die Kraft, die für dieses Abziehen erforderlich ist und in den folgenden Tabellen als »Trennwert« bezeichnet ist, gemessen.

I. Die von dem mit Organopolysiloxan beschichteten Papier abgezogenen Klebeband-Streifen werden mittels der Gummiwalze mit der gleichen Kraft, mit der sie vorher auf das beschichtete Papier aufgedrückt wird, auf unbehandelte Acetatfolie aufgedrückt. Es wird ebenfalls die Kraft gemessen, die für dieses weitere Abziehen unter den oben angegebenen Bedingungen erforderlich ist.

II. Ein Klebeband der oben näher bezeichneten Art wird mittels der Gummiwalze mit der gleichen Kraft mit der sie auf das beschichtete Papier aufgedrückt wird, auf unbehandelte Acetatfolie aufgedrückt. Nach 20 Stunden Erwärmen auf 70°C unter der gleichen Belastung, wie sie beim Erwärmen des Klebebands auf dem beschichteten Papier angewandt wird, wird das Klebeband unter den oben angegebenen Bedingungen abgezogen. Die dafür erforderliche Kraft wird als »Blindwert« bezeichnet.

Der in den folgenden Tabellen als »Restklebekraft« bezeichnete und in % angegebene Wert ergibt sich aus

$$\frac{\text{Kraft, gemessen nach I.}}{\text{Blindwert II.}} \cdot 100.$$

Tabelle 1

| Zeit zwischen Bereitung der Mischung und Auftragen auf Papier Stunden | Trennwert mN/mm | Restklebekraft % |
|---|---|---|
| 0 | 5,9 | 93 |
| 1 | 4,0 | 88 |
| 2 | 5,4 | 100 |
| 3 | 4,8 | 91 |
| 4 | 4,3 | 95 |
| 5 | 4,8 | 98 |
| 7 | 5,6 | 98 |
| 8 | 4,2 | 86 |
| 24 | 4,5 | 97 |

Beispiel 2

Die in Beispiel 1 beschriebene Arbeitsweise wird wiederholt mit der Abänderung, daß anstelle der 90 Teile 80 Teile des Vinyldimethylsiloxygruppen als endständige Einheiten enthaltenden Dimethylpolysiloxans und anstelle der 10 Teile 20 Teile des Mischpolymerisates aus Vinyldimethylsiloxan-, Methylhydrogensiloxan- und Dimethylsiloxaneinheiten verwendet werden. Die Ergebnisse sind in Tabelle 2 angegeben.

Tabelle 2

| Zeit zwischen Bereitung der Mischung und Auftragen auf Papier Stunden | Trennwert mN/mm | Restklebekraft % |
|---|---|---|
| 0 | 32,0 | 93 |
| 1 | 20,0 | 100 |
| 2 | 30,2 | 100 |
| 3 | 23,8 | 93 |
| 4 | 20,0 | 94 |
| 6 | 22,9 | 100 |
| 7 | 16,1 | 89 |
| 8 | 19,9 | 95 |
| 24 | 28,1 | 88 |

Vergleichsversuch

Die in Beispiel 1 beschriebene Arbeitsweise wird wiederholt mit der Abänderung, daß anstelle der 90 Teile 100 Teile des Vinyldimethylsiloxygruppen als endständige Einheiten enthaltenden Dimethylpolysiloxans und anstelle der 10 Teile des Mischpolymerisates aus Vinyldimethylsiloxan-, Methylhydrogensiloxan- und Dimethylsiloxaneinheiten 3 Teile eines Mischpolymerisates aus Trimethylsiloxan-, Methylhydrogensiloxan- und Dimethylsiloxaneinheiten mit 1,36% Si-gebundenem Wasserstoff und einer Viskosität von etwa 70 mPa · s bei 25° C verwendet werden.

Die Ergebnisse sind in Tabelle 3 angegeben.

Tabelle 3

| Zeit zwischen Bereitung der Mischung und Auftragen auf Papier Stunden | Trennwert mN/mm | Restklebekraft % |
|---|---|---|
| 0 | 0,9 | 95 |
| 4 | 1,5 | 98 |
| 24 | 2,1 | 98 |

Beispiel 3

Es werden Überzüge, die wie in Beispiel 1 und 2 sowie dem Vergleichsversuch angegeben, auf gebleichtem, mit Polyvinylalkohol gestrichenem Kraftpapier erzeugt wurden, mit anderen Klebstoffen als dem des in Beispiel 1 näher beschriebenen Klebebands geprüft. Die Ergebnisse sind in Tabelle 4 angegeben.

Tabelle 4

| | Beispiel 1 Trennwert mN/mm | Beispiel 2 Trennwert mN/mm | Vergleichsversuch Trennwert mN/mm |
|---|---|---|---|
| Tesa® 970 | 37,0 | 93,0 | 8,0 |
| Tesa® 171 | 10,4 | 49,2 | 1,6 |
| Acrylharzkleber aus Lösung | 37,8 | 67,2 | 2,9 |

Beispiel 4

a) 33 Teile eines Vinyldimethylsiloxygruppen als endständige Einheiten aufweisenden Diorganopolysiloxans aus 99,5 Molprozent Dimethylsiloxaneinheiten und 0,5 Molprozent Vinylmethylsiloxaneinheiten mit einem im Brabender-Plastograph bei 25° C und 60 Umdrehungen je Minute bestimmten Wert von 4000 Nm werden in 67 Teilen Toluol gelöst. Zu dieser Lösung werden 2,5‰, bezogen auf das Gewicht des Organopolysiloxans, 2-Methyl-3-butinol-2 gegeben.

b) 33 Teile des in Beispiel 1 näher beschriebenen Mischpolymerisates aus Vinyldimethylsiloxan-, Methylhydrogensiloxan- und Dimethylsiloxaneinheiten werden in 67 Teilen eines Xylolisomeren-Gemisches gelöst. Zu dieser Lösung werden ebenfalls 2,5‰, bezogen auf das Gewicht des Organopolysiloxans, 2-Methyl-3-butinol-2 gegeben.

Die Lösung, deren Herstellung oben unter a) beschrieben wurde, wird mit Lösung, deren Herstellung oben unter b) beschrieben wurde, in den in der folgenden Tabelle 5 angegebenen Verhältnissen gemischt. Die so erhaltenen Lösungen werden nach Verdünnen mit dem Alkangemisch mit einem

Siedebereich von 80 bis 110°C bei 1013 mbar (abs.) auf einen Organopolysiloxananteil von 5% mit soviel des Gemisches aus Platinkomplex und Verdünnungsmittel, dessen Herstellung oben beschrieben wurde, vermischt, daß sie jeweils 50 ppm Platin, berechnet als Element und bezogen auf den Siloxananteil, enthalten.

Die so erhaltenen Lösungen werden sofort bzw. nach den in Tabelle 5 angegebenen Zeiten mittels des Stabs aus rostfreiem Stahl, der mit 0,2 mm dickem Draht aus rostfreiem Stahl umwickelt ist, auf satiniertes Pergaminpapier in einer Menge von etwa 10 g Lösung/m$^2$ aufgetragen. Das so überzogene Papier wird 7 Sekunden in einem Umluftschrank auf 140°C erwärmt und dann wie in Beispiel 1 angegeben, geprüft.

Tabelle 5

| Zeit zwischen Bereitung der Lösungsmischungen und Auftragen auf Papier Stunden | Lösung a) : Lösung b) = 10 : 2 Trennwert mN/mm$^2$ | Restklebekraft % | Lösung a) : Lösung b) = 8 : 4 Trennwert mN/mm$^2$ | Restklebekraft % |
|---|---|---|---|---|
| 0 | 7,5 | 96 | 13,6 | 100 |
| 1 | 6,9 | 88 | 15,5 | 95 |
| 2 | 7,2 | 93 | 18,3 | 94 |
| 3 | 9,3 | 90 | 16,2 | 87 |
| 4 | 8,8 | 91 | 11,8 | 84 |
| 5 | 7,7 | 94 | 13,9 | 84 |
| 6 | 8,0 | 85 | 16,2 | 93 |
| 7 | 8,8 | 89 | 13,5 | 90 |
| 8 | 8,9 | 93 | 12,3 | 92 |
| 24 | 8,0 | 98 | 12,0 | 89 |

Beispiel 5

100 Teile eines Vinyldimethylsiloxygruppen als endständige Einheiten aufweisenden Dimethylpolysiloxans mit einer Viskosität von 500 mPa · s bei 25°C werden mit 20 Teilen eines Mischpolymerisates aus Vinyldimethylsiloxan-, Methylhydrogensiloxan- und Dimethylsiloxaneinheiten mit einer Viskosität von 828 mPa · s bei 25°C, wobei das Verhältnis der Methylhydrogensiloxaneinheiten zu den Dimethylsiloxaneinheiten 1 : 1 beträgt, vermischt. 100 Teile der so erhaltenen, eine Viskosität von 568 mPa · s bei 25°C aufweisenden Mischung werden in der angegebenen Reihenfolge mit 0,25 Teilen 2-Methyl-3-butinol-3, 0,5 Teilen Benzophenon und 0,4 Teilen des Gemisches aus Platinkomplex und Verdünnungsmittel, dessen Herstellung oben beschrieben wurde, vermischt.

Die so erhaltene Mischung wird in einer kontinuierlich betriebenen Anlage mittels eines Mehrwalzensystems in einer Menge von 0,4 bis 0,6 g/m$^2$ auf superkalandriertes Kraftpapier mit einer Bahnbreite von 80 cm aufgetragen, das mit einer Geschwindigkeit von 2 m$^2$/Minute je 1 kW Anschlußleistung unter 2 Ultraviolettlampen (IT-Quecksilber-Lichtblitzlampen, Fa. Hildebrand) mit einer Anschlußleistung von je 5 kW, die sich im Abstand von 20 cm vom Papier befinden, geführt. Die Ergebnisse der Prüfung sind in Tabelle 6 angegeben.

Tabelle 6

| Klebstoff | Trennwert mN/mm | Restklebekraft % |
|---|---|---|
| Tesa® 104 | 7,2 | 96 |
| Tesa® 154 | 7,9 | 82 |
| Tesa® 658*) | 12,5 | 98 |
| Tesa® 970 | 12,3 | 96 |
| Acrylharzkleber aus Toluol | 100 | 98 |

*) Das 20stündige Erwärmen erfolgte nicht bei 70°C, sondern bei 55°C.

Die gegenüber dem in der Beschreibung vor den Beispielen angegebene Höchstwert der Auftragsmenge von 0,6 g/m$^2$ beim Arbeiten in Abwesenheit wesentlicher Mengen von Lösungsmittel viel größere Auftragsmenge, die in Beispiel 1 angegeben ist, erklärt sich durch die Anwendung eines Labor-Auftragsverfahrens anstelle einer Beschichtungsmaschine.

**Patentansprüche**

1. Verfahren zum Herstellen von klebrige Stoffe abweisenden Überzügen durch Auftragen von Organopolysiloxan und die Anlagerung von Si-gebundenem Wasserstoff an aliphatische Mehrfachbindung förderndem Katalysator auf die klebrige Stoffe abweisend zu machenden Oberflächen und Vernetzung vom Organopolysiloxan durch die Anlagerung von Si-gebundenem Wasserstoff an aliphatische Mehrfachbindung, dadurch gekennzeichnet, daß zumindest ein Teil vom aufzutragenden Organopolysiloxan in jedem seiner Moleküle sowohl SiC-gebundene Gruppen, die aliphatische Mehrfachbindung aufweisen, als auch Si-gebundenen Wasserstoff enthält und eine Viskosität von mindestens 300 mPa · s bei 25°C hat, wobei die Mitverwendung einer organischen Verbindung mit mindestens einer Gruppierung

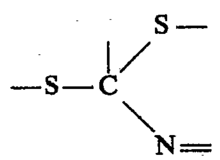

in Mengen, welche eine Verzögerung oder Verhinderung der Anlagerung von Si-gebundenem Wasserstoff an aliphatische Mehrfachbindung bei Raumtemperatur bewirken, ausgeschlossen ist.

2. Verfahren nach Anspruch 1, dadurch gekennzeichnet, daß als Organopolysiloxane, die in jedem ihrer Moleküle sowohl SiC-gebundene Gruppen mit aliphatischer Mehrfachbindung als auch Si-gebundenen Wasserstoff enthalten und eine Viskosität von mindestens 300 mPa · s bei 25°C haben, solche der allgemeinen Formel

$$R^1(CH_3)_2SiO(SiR_2O)_m(SiCH_3HO)_n(SiCH_3R^1O)_xSi(CH_3)_2R^1$$

verwendet werden, wobei R gleiche oder verschiedene, einwertige, gegebenenfalls substituierte, von aliphatischer Mehrfachbindung freie Kohlenwasserstoffreste, R$^1$ gleiche oder verschiedene Kohlenwasserstoffreste mit aliphatischer Mehrfachbindung, m, n und x jeweils ganze Zahlen bedeuten, wobei x auch 0 sein kann, deren Summen m + n + x jeweils einen solchen Wert haben, daß die durchschnittliche Viskosität dieser Organopolysiloxane mindestens 300 mPa · s bei 25°C beträgt, wobei mindestens 3 Si-gebundene Wasserstoffatome je Molekül vorliegen, das Verhältnis von m : n 1 : 1 bis 99 : 1 und das Verhältnis der $SiCH_3HO$-Einheiten zu den Einheiten mit einer R$^1$-Gruppe 5 : 1 bis 50 : 1 beträgt.

**Claims**

1. Process for the manufacture of coatings that repel adhesive substances, by applying, to surfaces to be made repellent to such substances, organopolysiloxane and a catalyst that promotes the addition of Si-bonded hydrogen to an aliphatic multiple bond, and cross-linking the organopolysiloxane by means of the addition of Si-bonded hydrogen to an aliphatic multiple bond thereof, characterised in that at least some of the organopolysiloxane to be applied contains in each of its molecules both SiC-bonded groups having an aliphatic multiple bond and Si-bonded hydrogen and has a viscosity of at least 300 mPa · s at 25° C, the concomitant use of an organic compound having at least one grouping

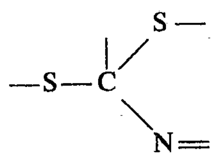

in amounts that delay or prevent the addition of Si-bonded hydrogen to an aliphatic multiple bond at room temperature being excluded.

2. Process according to claim 1, characterised in that, as organopolysiloxanes that contain in each of their molecules both SiC-bonded groups having an aliphatic multiple bond and Si-bonded hydrogen and that have a viscosity of at least 300 mPa · s at 25° C, there are used those of the general formula

$$R^1(CH_3)_2SiO(SiR_2O)_m(SiCH_3HO)_n(SiCH_3R^1O)_xSi(CH_3)_2R^1$$

in which R represents the same or different, monovalent, optionally substituted hydrocarbon radicals that are free of aliphatic multiple bonds, $R^1$ represents the same or different hydrocarbon radicals having an aliphatic multiple bond, m, n and x each represent an integer, it being possible for x also to represent 0, and the sum $m+n+x$ is always such that the mean viscosity of the organopolysiloxane is at least 300 mPa · s at 25° C, at least 3 Si-bonded hydrogen atoms being present per molecule, the ratio of m : n being from 1 : 1 to 99 : 1 and the ratio of the $SiCH_3HO$ units to the units having an $R^1$ group being from 5 : 1 to 50 : 1.

**Revendications**

1. Procédé pour réaliser des revêtements répulsifs à l'égard de matières collantes, par application, sur les surfaces à rendre répulsives à l'égard de matières collantes, d'un polyorganosiloxane et d'un catalyseur accélérant la fixation d'hydrogène lié à Si sur une liaison multiple aliphatique, et réticulation du polyorganosiloxane par fixation d'hydrogène lié à Si sur une liaison multiple aliphatique, procédé caractérisé en ce qu'au moins une partie du polyorganosiloxane à appliquer contient, dans chacune de ses mulécules, aussi bien des radicaux à insaturation aliphatique directement reliés à Si (liaisons du type Si-C) que de l'hydrogène lié à Si, et a une viscosité d'au moins 300 mPa · s à 25° C, l'emploi d'un composé organique renfermant un groupement:

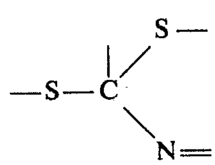

en des quantités qui provoquent, à la température ambiante, un ralentissement ou une inhibition de la fixation d'hydrogène lié à Si sur une liaison multiple aliphatique, étant exclu.

2. Procédé selon la revendication 1, caractérisé en ce qu'on utilise, comme polyorganosiloxanes contenant, dans chacune de ses molécules, aussi bien des radicaux à insaturation aliphatique directement reliés à Si que de l'hydrogène lié à Si, et ayant une viscosité d'au moins 300 mPa · s à 25° C, des polyorganosiloxanes qui répondent à la formule générale:

$$R^1(CH_3)_2SiO(SiR_2O)_m(SiCH_3HO)_n(SiCH_3R^1O)_xSi(CH_3)_2R^1$$

dans laquelle les R représentent chacun, indépendamment les uns des autres, un radical hydrocarboné monovalent, dépourvu de liaison multiple aliphatique et éventuellement substitué, les $R^1$ représentent chacun, indépendamment les uns des autres, un radical hydrocarboné contenant une liaison

multiple aliphatique, m, n et x représentent chacun un nombre entier, x peut aussi être nul, et la somme (m+n+x) a une valeur telle que la viscosité moyenne de ces polyorganosiloxanes soit d'au moins 300 mPa · s à 25°C, avec les conditions supplémentaires qu'il y ait, par molécule, au moins 3 atomes d'hydrogène liés à Si, que le rapport m : n soit compris entre 1 : 1 et 99 : 1, et que le rapport du nombre des motifs $SiCH_3HO$ au nombre des motifs renfermant un radical $R^1$ soit compris entre 5 : 1 et 50 : 1.